# EUROPÄISCHE PATENTSCHRIFT

(11) **EP 4 345 513 B1**
(45) Veröffentlichungstag und Bekanntmachung des Hinweises auf die Patenterteilung: **20.05.2026**
(21) Anmeldenummer: 23180321.4
(22) Anmeldetag: 20.06.2023
(51) Int. Cl.: G01V 8/20, G01V 8/12, H04Q 9/00, G08C 23/04

(54) **SENSORANORDNUNG**
SENSOR ASSEMBLY
AGENCEMENT DE CAPTEURS

(30) Priorität: 30.09.2022 DE 202022105557 U
(43) Veröffentlichungstag der Anmeldung: 03.04.2024
(73) Patentinhaber: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(56) Entgegenhaltungen:
- EP-A1- 1 816 487
- EP-A1- 4 191 552
- DE-A1- 102015 110 051
- DE-A1- 102018 117 878
- DE-U1- 202010 008 049
- DE-U1- 202013 105 384
- DE-U1- 202017 107 067
- DE-U1- 202020 104 223

## Beschreibung

Die Erfindung betrifft eine Sensoranordnung.

Derartige Sensoranordnungen umfassen einen optischen Sensor, der insbesondere von einem Lichtvorhang gebildet sein kann.

Der optische Sensor dient generell zur Erfassung von Objekten in einem Überwachungsbereich. Ein als Lichtvorhang ausgebildeter optischer Sensor umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern. Weiterhin ist eine Auswerteeinheit vorgesehen, in welcher in Abhängigkeit von Empfangssignalen der Empfänger ein Objektfeststellungssignal generiert. Dieses Objektfeststellungssignal ist vorzugsweise ein binäres Schaltsignal dessen Schaltzustände angeben, ob sich ein Objekt im Überwachungsbereich befindet oder nicht.

Typischerweise emittieren die einzelnen Sender Lichtstrahlen in Form von Lichtimpulsen. Die Lichtimpulse können Kodierungen ausbilden, anhand der die Lichtstrahlen der einzelnen Sender unterscheidbar sind. Zudem ist eine Unterscheidung von Lichtstrahlen unterschiedlicher Lichtvorhänge möglich.

Dies kann dazu genutzt werden, dass anhand der Lichtstrahlen eines Senders eine optische Synchronisation des Lichtvorhangs erfolgt, so dass dann Sender-Empfänger-Paare des Lichtvorhangs zyklisch einzeln nacheinander aktiviert werden, um die Objekterfassung im Überwachungsbereich durchzuführen.

Generell kann der optische Sensor auch in Form einer Lichtschranke mit nur einem Sender und einem Empfänger ausgebildet sein.

Die DE 20 2017 107 067 U1 betrifft ein Sendemodul zum Aussenden eines Sendelichtbündels, das einen Laserlichtsender und eine dem Laserlichtsender nachgeordnete Sendeoptik aufweist. Zwischen dem Laserlichtsender und der Sendeoptik ist ein optisches Trichterelement zur Specklereduzierung angeordnet, das eine dem Laserlichtsender zugewandte Lichteintrittsfläche und eine der Sendeoptik zugewandte Lichtaustrittsfläche aufweist, wobei die Lichtaustrittsfläche größer ist als die Lichteintrittsfläche.

Die EP 1 816 487 A1 betrifft eine Lichtschrankenanordnung die zur Erfassung von Objekten in einem Überwachungsbereich dient und eine eine vorgegebene Anzahl von Sendern aufweisende Sendereinheit und einer eine vorgegebene Anzahl von Empfängern aufweisende Empfängereinheit umfasst. Bei freiem Überwachungsbereich sind von den Sendern emittierte Sendelichtstrahlen zu zugeordneten Empfängern geführt. Bei einem Objekteingriff im Überwachungsbereich ist durch das Objekt der Strahlengang der von wenigstens einem der Sender emittierten Sendelichtstrahlen zum zugeordneten Empfänger unterbrochen, wodurch in der Empfängereinheit eine Objektmeldung generiert wird. In der Sendereinheit und in der Empfängereinheit ist jeweils eine Speichereinheit vorgesehen. In beiden Speichereinheiten sind jeweils die Sender und die Empfänger kennzeichnende Parameter abgespeichert. Weiterhin ist in der Sendereinheit und in der Empfängereinheit jeweils eine Schnittstelleneinheit integriert. Über die Schnittstelleneinheiten sind die Parameter zwischen Sendereinheit und Empfängereinheit übertragbar.

Die DE 10 2015 110 051 A1 betrifft ein Sicherheitslichtgitter mit einer Sendeeinheit, die eine Reihe nebeneinander angeordneter Lichtsender aufweist und einer Empfangseinheit, die den Lichtsendern der Sendeeinheit zugeordnete ebenfalls nebeneinander angeordnete Lichtempfänger aufweist, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden. Weiterhin umfasst das Sicherheitslichtgitter eine Empfangselektronik zur Verstärkung der Empfangssignale der Lichtempfänger und eine Auswerteeinheit, die die Empfangssignale auswertet. Die Lichtsender sind mit einer Ansteuereinheit zur Veränderung der Strahlleistung verbunden, so dass alle Empfangssignale bei einem freien Schutzfeld oberhalb einer Schaltschwelle der Auswerteeinheit liegen, wobei zwischen der Ansteuereinheit und der Auswerteeinheit ein Kommunikationskanal vorgesehen ist, so dass die Ansteuereinheit mit der Auswerteeinheit kommunizieren kann.

Die EP 4 191 552 A1 betrifft einen Lichtvorhang zur Erfassung von Objekten in einem Überwachungsbereich mit einer Sendereinheit umfassend eine Anordnung von Lichtstrahlen emittierenden Sendern und mit einer Empfängereinheit umfassend eine Anordnung von Lichtstrahlen empfangenden Empfängern. Jeweils ein Sender bildet mit einem zugeordneten Empfänger ein Sender-Empfänger-Paar. Bei freiem Überwachungsbereich treffen die Lichtstrahlen jedes Senders ungehindert auf den zugeordneten Empfänger. Bei einem Objekteingriff im Überwachungsbereich sind die Lichtstrahlen wenigstens eines Senders unterbrochen. Weiterhin ist eine Auswerteeinheit vorgesehen, in welcher in Abhängigkeit von Empfangssignalen der Empfänger ein Objektfeststellungssignal generiert wird. Der Lichtstrahl wenigstens eines Senders bildet einen Informationsstrahl, mittels dessen wenigstens eine Information in Form einer Kodierung an den zugeordneten Empfänger übertragen wird, wodurch eine Funktionsänderung in der Empfängereinheit bewirkt wird.

Die DE 10 2018 117 878 A1 betrifft ein Sicherheitslichtgitter zur Überwachung eines Schutzbereiches mit wenigstens zwei Sende-/Empfangsleisten, mit wenigstens einem Lichtsender und mit wenigstens einem Lichtempfänger, wobei die Sende-/Empfangsleisten einander gegenüberliegend angeordnet sind, und zwischen diesen durch die Lichtstrahlen der Lichtsender ein Schutzfeld gebildet ist, wobei jeweils wenigstens ein Lichtsender der einen Sende-/Empfangsleiste und wenigstens ein Lichtempfänger der anderen Sende-/Empfangsleiste ein Sende-/Empfangspaar bilden. Weiterhin ist das Sicherheitslichtgitter ausgerüstet mit Mitteln zur Synchronisation der Sende-/Empfangsleisten und mit einer Steuer- und Auswerteeinheit, wobei wenigstens einer der Lichtsender einer der Sende-/Empfangsleiste mit wenigstens einem der Lichtempfänger derselben Sende-/Empfangsleiste einen Lichttaster bildet, wobei der Lichttaster als Lichtlaufzeittaster ausgebildet ist, wobei die Steuer- und Auswerteeinheit ausgebildet ist, die Lichtlaufzeit empfangener Lichtsignale oder Lichtimpulse des Lichtempfängers auszuwerten, wobei der Lichtempfänger mindestens eine Einzelphotonenlawinendiode aufweist.

Die DE 20 2010 008 049 U1 betrifft ein Sicherheitslichtgitter mit mehreren Lichtsendern, mit denen jeweils wenigstens ein Sendelichtsignal in einen Überwachungsbereich aussendbar ist, mit einer Steuereinrichtung zur Ansteuerung der Lichtsender, die so ausgebildet ist, dass das von einem Lichtsender ausgesendete Sendelichtsignal pulsförmig ist, mit den Lichtsendern zugeordneten Lichtempfängern zum Empfangen des Lichtsignals, und mit einer den Lichtempfängern zugeordneten Auswerteeinheit, die zur Auswertung der Empfangssignale der Lichtempfänger sowie zum Erzeugen eines fehlersicheren Objekt-Feststellungssignals in Abhängigkeit der Empfangssignale ausgebildet ist. Die Steuereinrichtung weist Codiermittel auf, mit dem das Sendelichtsignal derart modulierbar ist, wobei verschiedene Informationsdaten von einem Lichtsender an den zugeordneten Lichtempfänger übermittelbar sind.

Die DE 20 2020 104 223 U1 betrifft einen Lichtvorhang zur Erfassung von Objekten in einem Überwachungsbereich, mit einer Reihenanordnung von Lichtstrahlen emittierenden Sendern an einem Rand des Überwachungsbereichs und mit einer Reihenanordnung von Lichtstrahlen empfangenden Empfängern am gegenüberliegenden Rand des Überwachungsbereich, wobei bei freiem Überwachungsbereich die Lichtstrahlen jedes Senders auf einen zugeordneten Empfänger geführt sind und bei einem Objekteingriff in den Überwachungsbereich der Strahlengang der Lichtstrahlen wenigstens eines Senders unterbrochen ist, und mit einer Auswerteeinheit, in welcher abhängig von Empfangssignalen der Empfänger ein Objektfeststellungssignal generiert wird. Sendeseitig sind Mittel zur Einstellung einer Betriebsart vorgesehen, wobei von wenigstens einem Sender die Betriebsart kodierende Signale mittels der von diesem Sender emittierten Lichtstrahlen zu dem zugeordneten Empfänger übertragen werden, wodurch die Einstellung dieser Betriebsart empfangsseitig übernommen wird.

Die DE 20 2013 105 384 U1 betrifft eine optoelektronische Vorrichtung zur optischen Datenkommunikation mit einer ersten Sensoreinheit und einer zweiten Sensoreinheit, die jeweils einen Lichtsender, einen Lichtempfänger und eine Auswertungseinheit aufweisen, um Daten längs einer bidirektionalen optischen Übertragungsstrecke im Freiraum zwischen den Sensoreinheiten auszutauschen, indem eine Sensoreinheit die Daten anhand eines Kommunikationsprotokolls auf ein ausgesandtes Lichtsignal aufmoduliert und die andere Sensoreinheit das Lichtsignal empfängt und die Daten durch Demodulation anhand des Kommunikationsprotokolls aus dem Lichtsignal ausliest. Zwischen den beiden Sensoreinheiten ist ein zusätzlicher Übertragungskanal vorgesehen, indem die Auswertungseinheit der einen Sensoreinheit dafür ausgebildet ist, das Lichtsignal mit einem zusätzlichen Signal zu modulieren und die Auswertungseinheit der anderen Sensoreinheit das zusätzliche Signal erkennt.

Der Erfindung liegt die Aufgabe zugrunde, einen Lichtvorhang mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor. Der optische Sensor weist wenigstens eine Strahlachse auf, welche von einem Lichtstrahlen emittierenden Sender und einem räumlich vom Sender getrennten Empfänger, der zum Empfang der Lichtstrahlen des Senders ausgebildet ist, gebildet wird. Über die Lichtstrahlen wird eine optische Kommunikation zwischen Sender und Empfänger ermöglicht. Mittels der Lichtstrahlen überträgt der Sender Betriebsinformationen und/oder Diagnoseinformationen an den Empfänger. Der Empfänger kann Betriebsinformationen und/oder Diagnoseinformationen und/oder aus Betriebsinformationen und/oder Diagnoseinformationen abgeleitete Informationen über ein Kommunikationssystem an eine externe Einheit ausgeben. In einem Fehler- oder Diagnosezustand des oder der Sender werden nur Diagnoseinformationen übertragen. In einem Normalzustand des oder der Sender werden Betriebsinformationen alleine oder kombiniert mit Diagnoseinformationen übertragen, wobei nach Wegfall des Fehler- oder Diagnosezustands für eine vorgegebene Zeitdauer nur Diagnoseinformationen von dem oder den Sendern übertragen werden. Nach Ablauf dieser Zeitdauer werden Betriebsinformationen übertragen.

Der Begriff Betriebsinformationen steht für Informationen die während des regulären Betriebs übertragen werden und wird hier stellvertretend für verschiedene Arten von Informationen verwendet, z.B. für Informationen zur Identifizierung des Sensors wie z.B. Artikelnummer, Seriennummer oder kundenspezifische Informationen. Desweiteren können Informationen über die physische Ausprägung des Sensors wie z.B. Strahlenanzahl, Auflösung, maximale Sendeleistung und dergleichen vorhanden sein. Sinngemäß fallen darunter auch Informationen über Betriebszustände, Umweltbedingungen wie z.B. Temperatur, Versorgungsspannung. Zuletzt sind darunter aber auch herstellerseitige bzw. kundenspezifische Konfigurationen wie z.B. Kanalauswahl, eingestellte Sendeleistungen usw. zu verstehen.

Der optische Sensor der erfindungsgemäßen Sensoranordnung wird in bekannter Weise zur Erfassung von Objekten in einem Überwachungsbereich eingesetzt. Dabei werden generell der oder die Sender und der oder die Empfänger des optischen Sensors an gegenüberliegenden Rändern des Überwachungsbereichs angeordnet. Im einfachsten Fall ist der optische Sensor eine Lichtschranke mit nur einem Sender und einem Empfänger. Besonders vorteilhaft ist der optische Sensor ein Lichtvorhang. Die Sender und Empfänger des Lichtvorhangs bilden dabei zusammenarbeitende Sender-Empfänger-Paare und damit Strahlachsen derart, dass bei freiem Überwachungsbereich die Lichtstrahlen des Senders eines Sender-Empfänger-Paars ungehindert auf den Empfänger dieses Sender-Empfänger-Paars treffen. Bei einem Eingriff eines Objektes in dem Überwachungsbereich unterbricht dieses den Strahlengang zumindest einer der Lichtstrahlen, wodurch das Objekt erkannt wird. Hierzu wird in einer Auswerteeinheit des Lichtvorhangs abhängig von den Empfangssignalen der Empfänger ein Objektfeststellungssignal generiert. Die Funktionsweise einer Lichtschranke ist entsprechend.

Erfindungsgemäß werden Betriebsinformationen und/oder Diagnoseinformationen von Sendern über deren Lichtstrahlen an zugeordnete Empfänger übertragen. Von dort werden die Betriebsinformationen und/oder Diagnoseinformationen oder daraus abgeleitete Informationen über das Kommunikationssystem ausgegeben und einer externen Einheit zugeführt.

Mit den Betriebsinformationen und Diagnoseinformationen werden Senderinformationen berührungslos an die Empfänger übertragen und von dort direkt oder nach einer Auswertung über das Kommunikationssystem an die externe Einheit als weiterem Bestandteil der Sensoranordnung ausgegeben und dort zu Kontrollzwecken und dergleichen genutzt.

Ein wesentlicher Vorteil der erfindungsgemäßen Sensoranordnung besteht dabei darin, dass zur Kommunikation mit der externen Einheit nur empfangsseitig, nicht aber senderseitig ein Kommunikationssystem vorgesehen sein muss, da Sensorinformation berührungslos über die Lichtstrahlen an die Empfänger gesendet werden.

Die erfindungsgemäße Sensoranordnung weist somit bei geringem konstruktivem Aufwand eine hohe Funktionalität auf.

Vorteilhaft sind der oder die Sender in einer Sendereinheit integriert, die eine Sendersteuerung zur Steuerung des Betriebs des oder der Sender aufweist.

Entsprechend sind der oder die Empfänger in einer Empfängereinheit integriert, die eine Auswerteeinheit zur Auswertung von Empfangssignalen des oder der Empfänger aufweist.

Dabei weist die Empfängereinheit eine digitale oder analoge Schnittstelle zum Anschluss des Kommunikationssystems auf.

Das Kommunikationssystem kann insbesondere eine IO-Link Verbindung, ein Feldbus oder eine Bluetooth-, WLAN- oder NFC-Datenverbindung sein.

Gemäß einer vorteilhaften Ausführungsform ist in der Empfängereinheit ein nicht flüchtiger Speicher vorhanden, in welchem Betriebsinformationen und/oder Diagnoseinformationen und/oder daraus abgeleitete Informationen abspeicherbar sind. Betriebsinformationen und/oder Diagnoseinformationen und/oder daraus abgeleitete Informationen können zu vorgebbaren Zeiten aus dem nicht flüchtigen Speicher ausgelesen und über die Schnittstelle ausgegeben werden.

Damit lässt sich das Zeitverhalten der Ausgabe von Informationen über das Kommunikationssystem einfach und flexibel steuern.

Gemäß einer vorteilhaften Ausgestaltung ist oder weist die externe Einheit ein Bedien- oder Anzeigegerät auf.

Mit dieser externen Einheit können Kontrollfunktionen für den optischen Sensor realisiert werden. Dabei kann die externe Einheit die Funktion eines Masters ausüben, insbesondere dann, wenn der optische Sensor über das Kommunikationssystem in ein Bussystem eingebunden ist.

Weiterhin sind mittels des Anzeigegeräts Betriebsinformationen und/oder Diagnoseinformationen anzeigbar.

Zusätzlich können Betriebsinformationen und/oder Diagnoseinformationen auch an einem Display oder dergleichen an der Empfängereinheit angezeigt werden.

Bei den Betriebsinformationen handelt es sich allgemein um Geräteinformationen des optischen Sensors wie Artikelnummer, Seriennummer, Baujahr, Versionsnummer oder Typbezeichnung. Zudem umfassen Betriebsinformationen Konfigurationen des optischen Sensors.

Bei den Diagnoseinformationen handelt es sich um Statusinformationen des optischen Sensors, insbesondere beinhalten Diagnoseinformationen Fehlerzustände des optischen Sensors. Hierbei ist vorteilhaft, dass die Sender auch noch im Fehlerfall Diagnoseinformationen senden können, so dass Fehlerzustände der Sender an die Empfängereinheit gesendet werden können, so dass dort entsprechende Maßnahmen getroffen werden können.

Das ist insbesondere dann vorteilhaft, wenn der optische Sensor ein Sicherheitssensor ist, d.h. einen fehlersicheren Aufbau aufweist, der Einsätze in sicherheitstechnischen Applikationen ermöglicht.

In diesem Fall wird der Sicherheitssensor in einen sicheren Zustand überführt, wenn anhand der Diagnoseinformationen ein Fehlerzustand detektiert wird.

Insbesondere wird ein sicherer Zustand dadurch realisiert, dass der optische Sensor und/oder eine von ihm überwachte Anlage abgeschaltet wird.

Erfindungsgemäß werden in einem Fehler- oder Diagnosezustand des oder der Sender nur Diagnoseinformationen übertragen.

Demgegenüber werden in einem Normalzustand des oder der Sender Betriebsinformationen alleine oder kombiniert mit Diagnoseinformationen übertragen.

Vorteilhaft werden der oder die Sender selbsttätig, insbesondere ereignisgesteuert in den Fehler- oder Diagnosezustand überführt, wenn sendeseitig im optischen Sensor ein Fehler festgestellt wird.

Weiter werden nach Wegfall des Fehler- oder Diagnosezustands für eine vorgegebene Zeitdauer nur Diagnoseinformationen von dem oder den Sendern übertragen. Nach Ablauf dieser Zeitdauer werden Betriebsinformationen übertragen.

Schließlich ist eine Zeitsteuerung derart möglich, dass die Übertragung von Betriebsinformationen und/oder Diagnoseinformationen mit Einschalten des oder der Sender gestartet und für eine vorgegebene Zeitdauer aufrechterhalten wird.

Durch die mit den Sendern übertragene Diagnoseinformationen liegen aktuell die Statusinformationen der Sender in der Empfängereinheit vor, wo diese ausgewertet werden. Insbesondere können in der Empfängereinheit Sicherheitsmaßnahmen abhängig vom Status der Sender getroffen werden, wobei insbesondere der optische Sensor in einen sicheren Zustand überführt wird.

Vorteilhaft werden im Normalzustand Betriebsinformationen und Diagnoseinformationen in Form von Betriebsübertragungsprotokollen übertragen. Im Fehler- und Diagnosezustand werden Diagnoseinformationen in Form von Diagnoseprotokollen übertragen, wobei sich die Betriebsübertragungsprotokolle und Diagnoseprotokolle voneinander unterscheiden.

Weiter vorteilhaft unterscheiden sich die Diagnoseprotokolle von Diagnoseprotokollen anderer optischer Sensoren.

Damit werden gegenseitige Beeinflussungen mehrerer optischer Sensoren dahingehend, dass ein optischer Sensor fälschlicherweise Diagnoseinformationen eines anderen optischen Sensors erhält und auswertet, vermieden. Eine entsprechende Unterscheidung von Betriebsinformationen mehrerer optischer Sensoren ist natürlich ebenfalls möglich.

Die zu übertragenden Betriebsinformationen stellen erhebliche Datenmengen dar, die in kurzen Zeitintervallen übertragen werden müssen, was zu hohen Restriktionen für die Betriebsübertragungsprotokolle führt. Demgegenüber sind für die Diagnoseprotokolle erheblich geringere Restriktionen vorhanden, insbesondere deshalb, da die Datenmengen der Diagnoseinformationen erheblich kleiner sind als die Datenmengen der Betriebsinformationen.

Vorteilhaft arbeitet der optische Sensor derart, dass den Lichtstrahlen Kennungen in Form von Strahlkodierungen aufgeprägt sind, anhand derer die Lichtstrahlen identifizierbar und unterscheidbar sind.

Bei einem optischen Sensor in Form einer Lichtschranke, die nur eine Strahlachse aufweist, können die Lichtstrahlen anhand der Strahlkodierungen von Störeinstrahlungen, die insbesondere von anderen optischen Sensoren gesendet werden, unterschieden werden.

Dies ist auch bei einem optischen Sensor in Form eines Lichtvorhangs der Fall. Zudem können anhand der Kennungen der Lichtstrahlen empfangsseitig die einzelnen Strahlachsen voneinander unterschieden werden. Damit wird auch eine optische Synchronisierung des Lichtvorhangs anhand wenigstens einer der Strahlachsen ermöglicht.

Vorteilhaft emittieren die Sender Lichtstrahlen in Form von Lichtimpulsen. Die Strahlkodierungen können dann in Form der Anzahl von Lichtimpulsen in Pulsfolgen der Sender, durch die Pulspausen zwischen einzelnen Lichtimpulsen oder auch durch Pulsbreiten, d.h. Pulsdauern der einzelnen Lichtimpulse definiert sein.

Ein wesentlicher Aspekt besteht darin, dass die Betriebsinformationen und Diagnoseinformationen von zusätzlich zu den Kennungen vorgesehenen Strahlkodierungen gebildet sind.

Gemäß einer vorteilhaften Ausführungsform werden bei einem als Lichtvorhang ausgebildeten optischen Sensor die Betriebsinformationen und/oder die Diagnoseinformationen nur über einzelne, ausgewählte Strahlachsen übertragen.

Im Normalzustand des optischen Sensors können Diagnoseinformationen und Betriebsinformationen abwechselnd übertragen werden, d.h. auf die Übertragung einer Diagnoseinformation folgt eine Übertragung einer Betriebsinformation. Alternativ können im Normalzustand des optischen Sensors Diagnoseinformationen und Betriebsinformationen zyklisch übertragen werden. Schließlich werden im Fehler- und Diagnosezustand Diagnoseinformationen alleine zyklisch übertragen.

Bei einer solchen zyklischen Übertragung ist es insbesondere möglich, dass innerhalb eines Zyklus nur ein Teil einer Diagnoseinformation oder Betriebsinformation übertragen wird, und dass die Diagnoseinformation oder Betriebsinformation aus mehreren Teilinformationen, die in einzelnen Zyklen übertragen werden, empfangsseitig zusammengesetzt werden.

Diese Übertragungsart eignet sich insbesondere für Diagnoseinformationen, wo nur kleine Datenmengen anfallen und auch keine strengen Restriktionen an die Übertragungsseiten vorliegen.

Gemäß einer besonders vorteilhaften Ausgestaltung enthalten die Betriebsinformationen und Diagnoseinformationen Prüfinformationen, wobei empfangsseitig diese Prüfinformationen zur Feststellung der Validität der Betriebsinformationen und Diagnoseinformationen überprüft werden.

Die Prüfinformationen können Parity-Bits, CRC-Prüfsummen und dergleichen sein.

Anhand der Prüfinformationen wird vorteilhaft in der Auswerteeinheit der Empfängereinheit die Validität der Betriebsinformationen und Diagnoseinformationen geprüft, wobei in der Auswerteeinheit zweckmäßig nur validierte Betriebsinformationen und Diagnoseinformationen ausgewertet werden.

Mit den Prüfinformationen wird eine fehlersichere Übertragung von Betriebsinformationen und Diagnoseinformationen gewährleistet, was insbesondere für optische Sensoren, die als Sicherheitssensoren ausgebildet sind, wesentlich ist.

Gemäß einer weiteren Ausgestaltung der erfindungsgemäßen Sensoranordnung weist diese zwei räumlich getrennten Transceiver mit jeweils einer Anordnung von Sendern und Empfängern auf.

Dabei ist vorteilhaft, dass nur ein Transceiver mit dem Kommunikationssystem verbunden ist.

Bei dieser Ausführungsform senden entweder beide Transceiver Informationen über die Sendestrahlen an den jeweils anderen Transceiver, oder dass nur ein Transceiver Informationen an den Transceiver mit dem angeschlossenen Kommunikationssystem übertragt.

Die Erfindung wird im Folgenden anhand der Zeichnungen erläutert. Es zeigen:
- Figur 1:: Ausführungsbeispiel der erfindungsgemäßen Sensoranordnung mit einem Lichtvorhang.
- Figur 2:: Beispiel für Betriebsübertragungsprotokolle für den Lichtvorhang gemäß Figur 1.
- Figur 3:: a) Beispiel eines Ident-Frames eines Betriebsübertragungsprotokolls.
b) Beispiel eines Daten-Frames eines Betriebsübertragungsprotokolle.
- Figur 4:: Übertragungsbeispiel mit einem Identframe gefolgt von zwei Datenframes.
- Figur 5:: Beispiel einer zyklischen Übertragung von Betriebsinformationen und Diagnoseinformationen.
- Figur 6:: Beispiel einer alternierenden Übertragung von Betriebsinformationen und Diagnoseinformationen.
- Figur 7:: a) Kennung eines Normalstrahls des Lichtvorhangs gemäß Figur 1.
b) Kennung eines Synchronisationsstrahls des Lichtvorhangs gemäß Figur 1.
c) Erstes Diagnoseprotokoll einer Strahlachse des Lichtvorhangs.
d) Zweites Diagnoseprotokoll einer Strahlachse des Lichtvorhangs.
e) Drittes Diagnoseprotokoll einer Strahlachse des Lichtvorhangs.
- Figur 8a-c:: Beispiel von Übertragungen von Diagnoseinformationen.
- Figur 9:: Beispiel einer Übertragung von Diagnoseinformationen über zwei Strahlachsen des Lichtvorhangs.
- Figur 10:: Ausführungsbeispiel der erfindungsgemäßen Sensoranordnung mit zwei Transceivern.

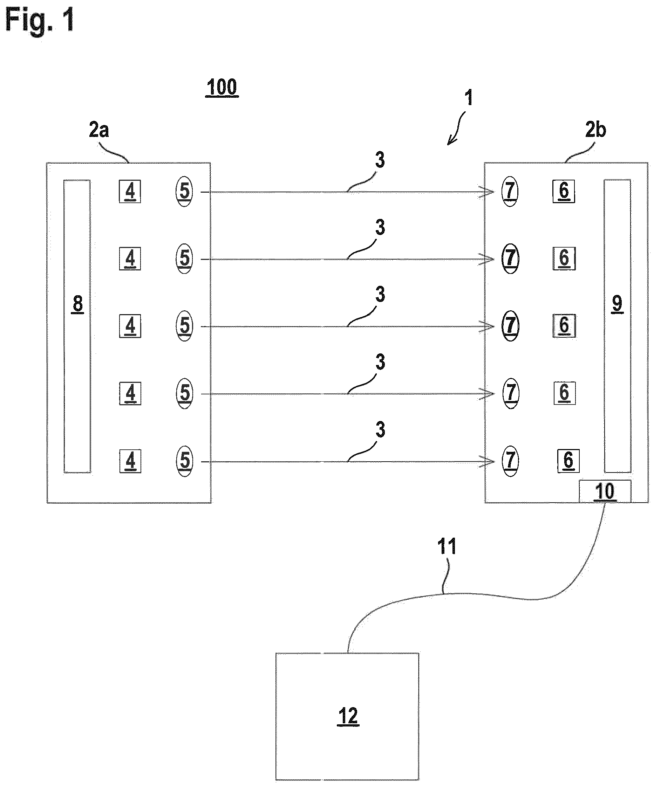

Figur 1 zeigt ein Ausführungsbeispiel der erfindungsgemäßen Sensoranordnung 100.

Die Sensoranordnung 100 umfasst einen optischen Sensor in Form eines Lichtvorhangs 1, der zur Erfassung von Objekten innerhalb eines Überwachungsbereichs dient.

Der Lichtvorhang 1 weist eine Sendereinheit mit einem Gehäuse 2a mit einer Reihenanordnung von Lichtstrahlen 3 emittierenden Sendern 4 und diesen zugeordneten Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils eine Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind fünf Strahlachsen vorgesehen. Natürlich kann der Lichtvorhang 1 auch eine andere Zahl von Strahlachsen aufweisen. Generell kann der optische Sensor auch als Lichtschranke mit nur einer Strahlachse ausgebildet sein.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Die Erfassung von Objekten erfolgt in einem Arbeitsbetrieb des Lichtvorhangs 1. Die Sender 4 emittieren dabei Lichtstrahlen 3 in Form von Lichtimpulsen.

Die Sender 4 werden mittels einer in der Sendersteuerung 8 vorhandenen Schiebekette zyklisch einzeln nacheinander aktiviert. Entsprechend werden die Empfänger 6 mittels einer Schiebekette zyklisch einzeln nacheinander aktiviert. Der Lichtvorhang 1 ist auf optischem Weg synchronisiert, so dass dessen Sender-Empfänger-Paare zyklisch einzeln nacheinander aktiviert sind.

Die Lichtstrahlen 3 des Lichtvorhangs 1 weisen unterschiedliche Kennungen in Form von Strahlkodierungen auf, wobei die Strahlkodierungen von unterschiedlichen Pulsfolgen von Lichtimpulsen gebildet sind. Damit können Normalstrahlen, die nur zur Objektdetektion verwendet werden und Synchronisationsstrahlen, die zusätzlich zur optischen Synchronisierung des Lichtvorhangs 1 verwendet werden, unterschieden werden.

Der Lichtvorhang 1 oder allgemein der optische Sensor kann als Sicherheitssensor ausgebildet sein. Vorteilhaft sind ein fehlersicherer Aufbau des Sicherheitssensors durch eine redundant aufgebaute Auswerteeinheit 9 realisiert.

Beispielsweise kann die Auswerteeinheit 9 aus zwei sich zyklisch gegenseitig überwachenden Rechnereinheiten bestehen.

Ein Beispiel für eine sicherheitstechnische Applikation des Sicherheitssensors ist eine Gefahrenüberwachung an einer Anlage. Die vom Sicherheitssensor generierten Schaltsignale werden an eine Steuerung der Anlage ausgegeben. Der Betrieb der Anlage wird nur dann freigegeben, wenn mit dem Sicherheitssensor ein freier Überwachungsbereich detektiert wird und der Sicherheitssensor fehlerfrei arbeitet.

Der Lichtvorhang 1 umfasst eine digitale oder analoge Schnittstelle 10, an welche ein Kommunikationssystem 11 als weitere Komponente der Sensoranordnung 100 angeschlossen ist. Mit dem Kommunikationssystem 11 wird eine Datenverbindung zu einer externen Einheit 12, die auch Bestandteil der Sensoranordnung 100 ist, hergestellt.

Vorteilhaft ist das Kommunikationssystem 11 eine IO-Link Verbindung, ein Feldbus oder eine Bluetooth-, WLAN- oder NFC-Datenverbindung.

Die externe Einheit 12 kann ein Master eines Bussystems sein.

Insbesondere weist oder ist die externe Einheit 12 ein Bedien- oder Anzeigegerät.

Mit dem Anzeigegerät können Informationen des Lichtvorhangs 1, die über das Kommunikationssystem 11 übertragen werden, angezeigt werden.

Erfindungsgemäß werden über Lichtstrahlen 3 der Sender 4 des Lichtvorhangs 1 Senderinformationen, nämlich Betriebsinformation und/oder Diagnoseinformation, an die zugeordneten Empfänger 6 gesendet. Diese Betriebsinformation und/oder Diagnoseinformation sowie ggf. daraus abgeleitete Informationen werden über die Kommunikationssysteme 11 an die externe Einheit 12 gesendet und dort ggf. angezeigt. Weiterhin ist dadurch eine Kontrolle des Lichtvorhangs 1 durch die externe Einheit 12 möglich.

Vorteilhaft ist in der Empfängereinheit ein nicht flüchtiger Speicher vorhanden, in welchem Betriebsinformationen und/oder Diagnoseinformationen und/oder daraus abgeleitete Informationen abspeicherbar sind. Betriebsinformationen und/oder Diagnoseinformationen und/oder daraus abgeleitete Informationen sind zu vorgebbaren Zeiten aus dem nicht flüchtigen Speicher auslesbar und über die Schnittstelle 10 ausgebbar.

Die Betriebsinformationen können Gerätefunktionen oder Konfigurationen des Lichtvorhangs 1, insbesondere der Sendereinheit sein. Die Diagnoseinformation sind Statusinformationen oder Fehler, die in der Sendereinheit auftreten können.

Erfindungsgemäß werden in einem Fehler- oder Diagnosezustand des oder der Sender 4 nur Diagnoseinformationen übertragen.

Demgegenüber werden in einem Normalzustand des oder der Sender 4 Betriebsinformationen alleine oder kombiniert mit Diagnoseinformationen übertragen.

Nach Wegfall des Fehler- oder Diagnosezustands werden für eine vorgegebene Zeitdauer nur Diagnoseinformationen von dem oder den Sendern 4 übertragen. Nach Ablauf dieser werden Zeitdauer Betriebsinformationen übertragen.

Weiterhin wird vorteilhaft die Übertragung von Betriebsinformationen und/oder Diagnoseinformationen mit Einschalten des oder der Sender 4 gestartet und für eine vorgegebene Zeitdauer aufrechterhalten.

Im Normalzustand können Betriebsinformationen und vorteilhaft auch Diagnoseinformation in Form von Betriebsübertragungsprotokollen übertragen werden.

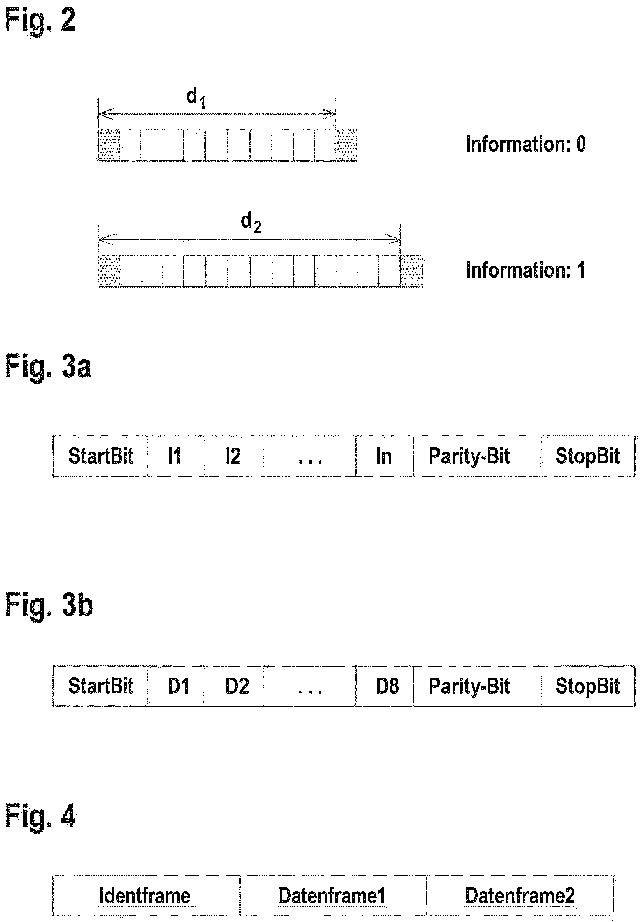

Mit dem Betriebsübertragungsprotokoll können unterschiedliche Informationen übertragen werden, wie Figur 2 zeigt. Dort sind zwei Informationen (Bits) durch unterschiedliche Folgen von Pulsabständen der Lichtimpulse kodiert, wobei die Kodierung durch unterschiedliche Anzahlen von Lichtimpulsen und Pulsabständen benachbarter Lichtimpulse der Lichtstrahlen 3 eines Senders 4 gegeben sind.

Figur 3a zeigt einen Ident-Frame für die Übertragung von Informationen innerhalb des Betriebsübertragungsprotokolls. Der Ident-Frame legt die Anzahl und Struktur der nachfolgenden Datenframes (Figur 3b) für die Datenübertragung im Betriebsübertragungsprotokoll fest. Wie Figur 3a zeigt, weist der Ident-Frame ein Start-Bit, Informations-Bits I₁ ... Iₙ, ein Parity-Bit und ein Stop-Bit auf.

Für eine Informationsübertragung werden ein oder mehrere Daten-Frames (Figur 4) entsprechend dem Aufbau des Ident-Frames von einem Sender 4 an den zugeordneten Empfänger 6 gesendet. Im Daten-Frame sind Felder D₁ ... Dₙ des Daten-Frame mit Daten belegt, wobei im Fall von Figur 4 zwei Datenframes mit jeweils acht Datenbits D₁ ... D₈ vorhanden sind.

Anhand des Parity-Bits oder allgemein einer Prüfinformation erfolgt empfangsseitig eine Überprüfung und Validierung der übertragenen Informationen.

Im Normalzustand werden mit dem Betriebsübertragungsprotokoll Betriebsinformationen und ggf. auch Diagnoseinformationen über alle oder nur ausgewählte Strahlachsen des Lichtvorhangs 1 übertragen.

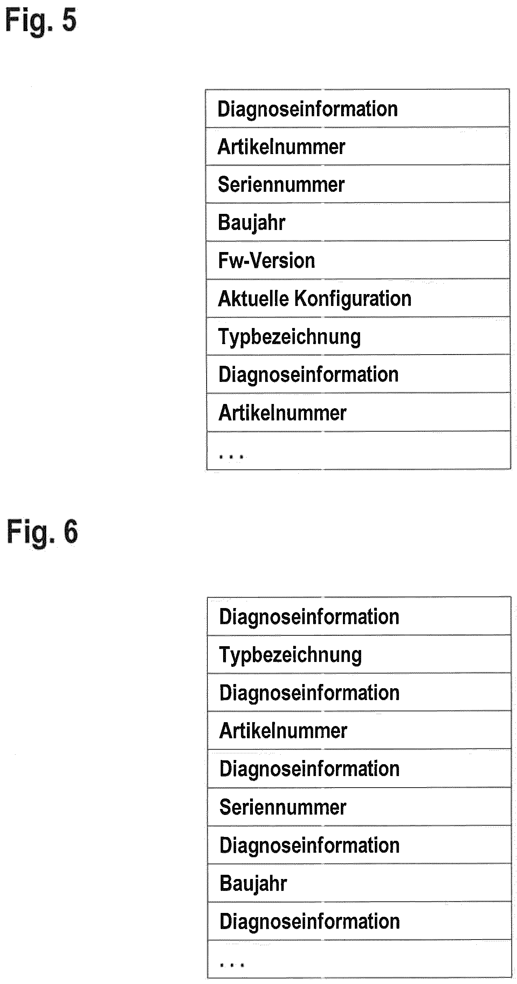

Figur 5 zeigt eine zyklische Übertragung von Betriebsinformationen und Diagnoseinformationen.

Figur 6 zeigt eine alternierende Übertragung von Betriebsinformationen und Diagnoseinformationen.

In der Ausführungsform gemäß den Figuren 5 und 6 sind als Betriebsinformation exemplarisch die Artikelnummer, die Seriennummer, das Baujahr, eine Firmware-Version, die Typbezeichnung als Geräteparameter des Lichtvorhangs 1 und auch die aktuelle Konfiguration des Lichtvorhangs 1 vorgesehen.

Im Fehler- und Diagnosezustand werden nur Diagnoseinformationen übertragen und zwar im Rahmen eines Diagnoseprotokolls. Dabei werden die Diagnoseinformationen nicht über alle Strahlachsen übertragen, sondern nur über einige ausgewählte Strahlachsen. Im vorliegenden Fall werden Diagnoseinformationen nur über die erste und letzte Strahlachse des Lichtvorhangs 1 übertragen. Vorteilhaft erfolgt die Übertragung der Diagnoseinformation über diese Strahlachsen zeitlich versetzt.

Vorteilhaft erfolgt dabei die Übertragung der Diagnoseinformation zyklisch. Innerhalb eines Zyklus können auch Teilinformationen gesendet werden, die dann empfangsseitig zur genannten Diagnoseinformation zusammengefügt werden.

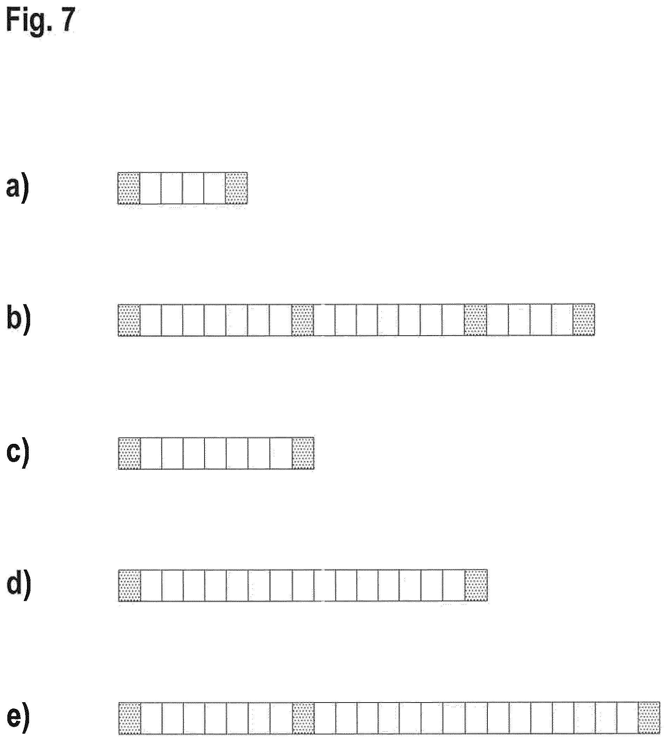

Die Figuren 7a bis 7e zeigen unterschiedliche Strahlkodierungen, welche aus einzelnen Bits bestehen, die durch Anzahl von Pulsen oder Pulsabständen benachbarter Lichtimpulsen von Pulsfolgen über Strahlachsen gebildet sind.

Figur 7a zeigt die Strahlkodierung eines Normalstrahls. Figur 7b zeigt die Strahlkodierung eines Synchronisationsstrahls. Figur 7c zeigt die Strahlkodierung einer Diagnoseinformation mit einem Signalzustands 0, die über eine Strahlachse übertragen wird. Die Figuren 7d, 7e zeigen zwei Varianten einer Diagnoseinformation mit einem Signalzustand 1, die über eine Strahlachse übertragen wird. Dabei werden im Fall der Figuren 7c bis 7e die Diagnoseinformation über einen Synchronisationsstrahl übertragen.

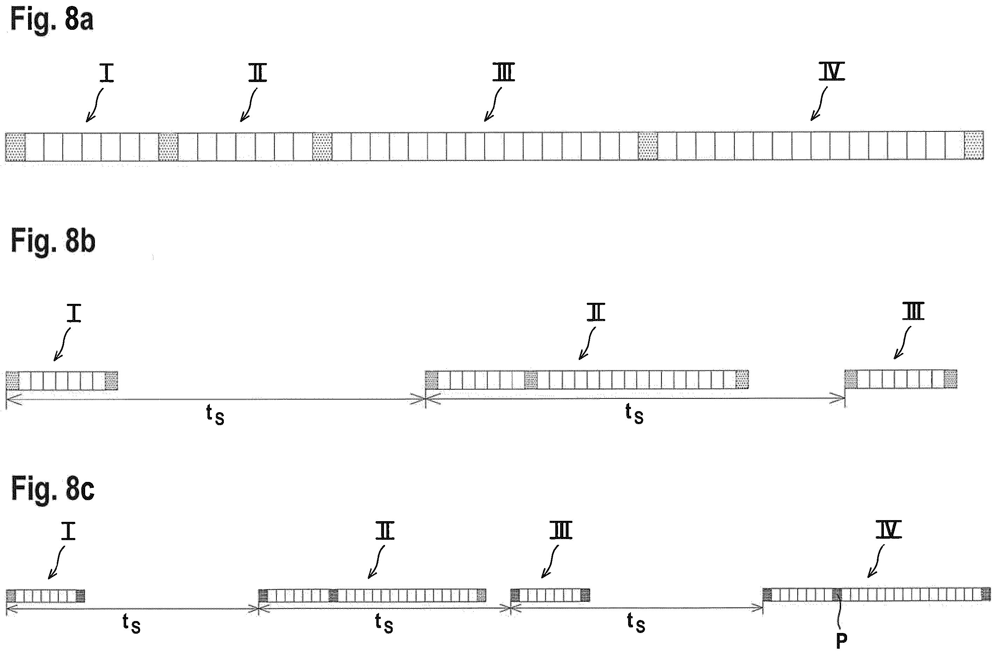

Die Figuren 8a bis 8c zeigen unterschiedliche Varianten der Übertragung von Dateninformationen.

Figur 8a zeigt eine Übertragung einer binären Diagnoseinformation 0011, mit vier Teilinformationen I, II, III, IV, die seriell verkettet sind.

Die Teilinformationen I, II enthalten die Informationswerte 0. Die Teilinformationen III, IV enthalten die Informationswerte 0.

Figur 8b zeigt eine Übertragung einer binären Diagnoseinformation 010 mit drei Pulsgruppen I, II, III, die durch feste zeitliche Abstände tₛ getrennt sind. In den Pulsgruppen I, III ist jeweils der Signalwert "0" kodiert. In der Pulsgruppe II ist der Signalwert "1" kodiert.

Figur 8c zeigt eine Übertragung einer binären Dateninformation 0101 mit vier Pulsgruppen I bis IV. In den Pulsgruppen I, III ist jeweils der Signalwert "0" kodiert. In den Pulsgruppen II, IV ist jeweils der Signalwert "1" kodiert. Zur Fehlersicherung ist in der Pulsgruppe IV ein Parity-Bit vorhanden.

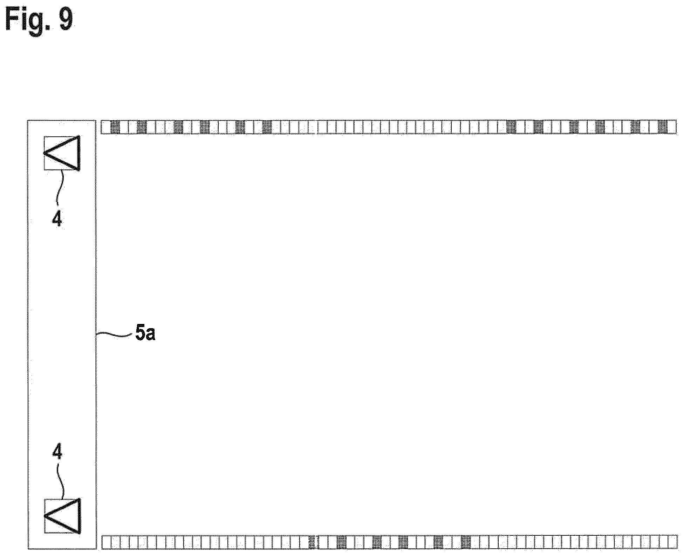

Figur 9 zeigt ein Beispiel einer Übertragung von Diagnoseinformationen mittels zwei Strahlachsen, wobei im vorliegenden Fall die erste und letzte Strahlachse des Lichtvorhangs 1 genutzt wird.

Die Aussendung der Diagnoseinformationen an der Strahlachsen erfolgt zeitlich versetzt. Der Start einer Übertragung an einer Strahlachse wird durch eine lange Pause erkannt, die durch diese Übertragung aus der anderen Strahlachse entsteht.

Die Übertragung der Diagnoseinformationen erfolgt in diesem Fall redundant über beide Strahlachsen.

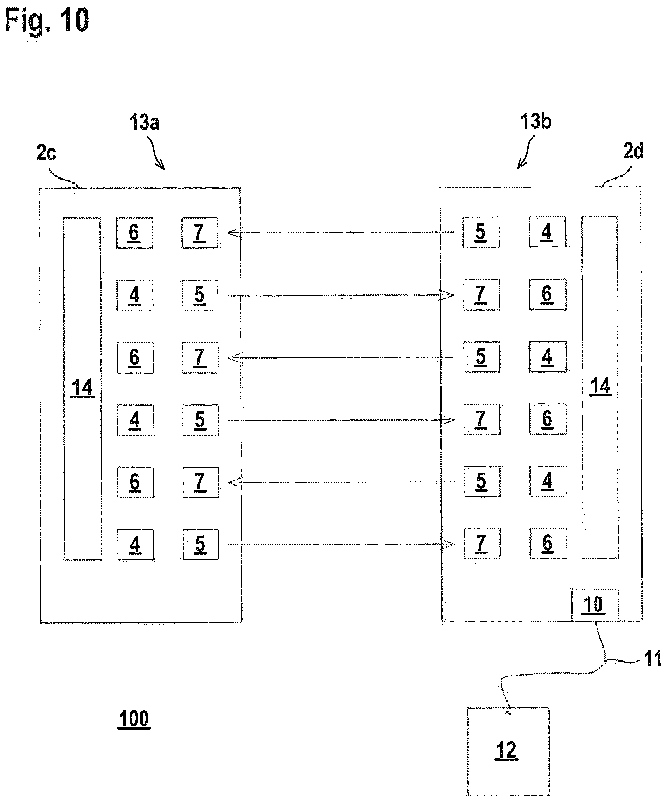

Figur 10 zeigt ein weiteres Ausführungsbeispiel der erfindungsgemäßen Sensoranordnung 100. Diese Sensoranordnung 100 weist zwei Transceiver 13a, 13b auf, die an gegenüberliegenden Rändern des Überwachungsbereichs angeordnet sind. Die Komponenten jedes Transceivers 13a, 13b sind jeweils in einem Gehäuse 2c, 2d integriert.

Jeder Transceiver 13a, 13b weist eine Reihenanordnung von Sendern 4 und Empfängern 6 auf, welche jeweils alternierend so angeordnet sind, dass Lichtstrahlen 3 eines Senders 4 eines Transceivers 13a, 13b bei freiem Überwachungsbereich auf einem zugeordneten Empfänger 6 des anderen Transceivers 13b, 13a treffen. In jedem Transceiver 13a, 13b ist eine Steuer- und Auswerteeinheit 14 vorhanden, die zur Steuerung der Sender 4 und zur Auswertung der Empfangssignale der Empfänger 6 des jeweiligen Transceivers 13a, 13b dient.

Nur der Transceiver 13b weist eine Schnittstelle 10 zum Anschluss des Kommunikationssystems 11 und der externen Einheit 12 auf.

### Bezugszeichenliste

- (1): Lichtvorhang
- (2a): Gehäuse
- (2b): Gehäuse
- (2c): Gehäuse
- (2d): Gehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10): Schnittstelle
- (11): Kommunikationssystem
- (12): externe Einheit
- (13a): Transceiver
- (13b): Transceiver
- (14): Steuer- und Auswerteeinheit

- (100): Sensoranordnung

## Patentansprüche

1. Sensoranordnung (100) mit einem optischen Sensor, wobei der optische Sensor wenigstens eine Strahlachse aufweist, welche von einem Lichtstrahlen (3) emittierenden Sender (4) und einem räumlich vom Sender (4) getrennten Empfänger (6), der zum Empfang der Lichtstrahlen (3) des Senders (4) ausgebildet ist, gebildet ist, wobei mittels der Lichtstrahlen (3) eine optische Kommunikation zwischen Sender (4) und Empfänger (6) möglich ist, wobei der Sender (4) dazu ausgebildet ist, mittels der Lichtstrahlen (3) Betriebsinformationen und/oder Diagnoseinformationen an den Empfänger (6) zu übertragen, und der Empfänger (6) dazu ausgebildet ist, Betriebsinformationen und/oder Diagnoseinformationen und/oder aus Betriebsinformationen und/oder Diagnoseinformationen abgeleitete Informationen über ein Kommunikationssystem (11) an eine externe Einheit (12) auszugeben, wobei in einem Fehler- oder Diagnosezustand des oder der Sender (4) nur Diagnoseinformationen übertragen werden, und in einem Normalzustand des oder der Sender (4) Betriebsinformationen alleine oder kombiniert mit Diagnoseinformationen übertragen werden, wobei nach Wegfall des Fehler- oder Diagnosezustands für eine vorgegebene Zeitdauer nur Diagnoseinformationen von dem oder den Sendern (4) übertragen werden, und nach Ablauf dieser Zeitdauer Betriebsinformationen übertragen werden.

2. Sensoranordnung (100) nach Anspruch 1 **dadurch gekennzeichnet, dass** diese zwei räumlich getrennte Transceiver (13a, 13b) mit jeweils einer Anordnung von Sendern (4) und Empfängern (6) aufweist, oder dass der optische Sensor eine Lichtschranke mit nur einer Strahlachse oder ein Lichtvorhang (1) mit mehreren Strahlachsen ist

3. Sensoranordnung (100) nach Anspruch 2, **dadurch gekennzeichnet, dass** nur ein Transceiver (13a, 13b) mit dem Kommunikationssystem (11) verbunden ist.

4. Sensoranordnung (100) nach Anspruch 3, **dadurch gekennzeichnet, dass** entweder beide Transceiver (13a, 13b) Informationen über die Sendestrahlen an den jeweils anderen Transceiver (13b, 13a) senden, oder dass nur ein Transceiver (13a, 13b) Informationen an den Transceiver (13a, 13b) mit dem angeschlossenen Kommunikationssystem (11) überträgt.

5. Sensoranordnung (100) nach einem der Ansprüche 1 bis 4, **dadurch gekennzeichnet, dass** das Kommunikationssystem (11) eine IO-Link Verbindung, ein Feldbus oder eine Bluetooth-, WLAN- oder NFC-Datenverbindung ist.

6. Sensoranordnung (100) nach einem der Ansprüche 1 bis 5, **dadurch gekennzeichnet, dass** die Übertragung von Betriebsinformationen und/oder Diagnoseinformationen mit Einschalten des oder der Sender (4) gestartet wird und für eine vorgegebene Zeitdauer aufrechterhalten wird.

7. Sensoranordnung (100) nach einem der Ansprüche 1 bis 6, **dadurch gekennzeichnet, dass** im Normalzustand Betriebsinformationen und Diagnoseinformationen in Form von Betriebsübertragungsprotokollen übertragen werden, und dass im Fehler- und Diagnosezustand Diagnoseinformationen in Form von Diagnoseprotokollen übertragen werden, wobei sich die Betriebsübertragungsprotokolle und Diagnoseprotokolle voneinander unterscheiden.

8. Sensoranordnung (100) nach einem der Ansprüche 1 bis 7, **dadurch gekennzeichnet, dass** bei einem als Lichtvorhang (1) ausgebildeten optischen Sensor die Betriebsinformation wahlweise über alle Strahlachsen, oder nur an ausgewählten Stahlaschen übertragen werden und die Diagnoseinformationen nur über einzelne, ausgewählte Strahlachsen übertragen werden.

9. Sensoranordnung (100) nach einem der Ansprüche 1 bis 8, **dadurch gekennzeichnet, dass** den Lichtstrahlen (3) Kennungen in Form von Strahlkodierungen aufgeprägt sind, anhand derer die Lichtstrahlen (3) identifizierbar und unterscheidbar sind.

10. Sensoranordnung (100) nach Anspruch 9, **dadurch gekennzeichnet, dass** bei einem als Lichtvorhang (1) ausgebildeten optischen Sensor die Lichtstrahlen (3) wenigstens eines Senders (4) zur optischen Synchronisierung des Lichtvorhangs (1) verwendet werden, und/oder dass die Betriebsinformationen und Diagnoseinformationen von zusätzlich zu den Kennungen vorgesehenen Strahlkodierungen gebildet sind.

11. Sensoranordnung (100) nach einem der Ansprüche 1 bis 10, **dadurch gekennzeichnet, dass** Diagnoseinformationen und Betriebsinformationen abwechselnd übertragen werden, und/oder dass Diagnoseinformationen und/oder Betriebsinformationen zyklisch übertragen werden.

12. Sensoranordnung (100) nach Anspruch 11, **dadurch gekennzeichnet, dass** innerhalb eines Zyklus nur ein Teil einer Diagnoseinformation oder Betriebsinformation übertragen wird, und dass die Diagnoseinformation oder Betriebsinformation aus mehreren Teilinformationen, die in einzelnen Zyklen übertragen werden, empfangsseitig zusammen gesetzt werden, und/oder dass die Betriebsinformationen und Diagnoseinformationen Prüfinformationen enthalten, wobei empfangsseitig diese Prüfinformationen zur Feststellung der Validität der Betriebsinformationen und Diagnoseinformationen überprüft werden.

13. Sensoranordnung (100) nach einem der Ansprüche 1 bis 12, **dadurch gekennzeichnet, dass** der oder die Empfänger (6) in einer Empfängereinheit integriert sind, die eine Auswerteeinheit (9) zur Auswertung von Empfangssignalen des oder der Empfänger (6) aufweist, und/oder dass der oder die Sender (4) in einer Sendereinheit integriert sind, die eine Sendersteuerung (8) zur Steuerung des Betriebs des oder der Sender (4) aufweist.

14. Sensoranordnung (100) nach Anspruch 13, **dadurch gekennzeichnet, dass** die Empfängereinheit eine digitale oder analoge Schnittstelle (10) zum Anschluss des Kommunikationssystems (11) aufweist.

15. Sensoranordnung (100) nach Anspruch 14, **dadurch gekennzeichnet, dass** in der Empfängereinheit ein nicht flüchtiger Speicher vorhanden ist, in welchem Betriebsinformationen und/oder Diagnoseinformationen und/oder daraus abgeleitete Informationen des Senders (4) und/oder Empfängers (6) abspeicherbar sind, und dass Betriebsinformationen und/oder Diagnoseinformationen und/oder daraus abgeleitete Informationen zu vorgebbaren Zeiten aus dem nicht flüchtigen Speicher auslesbar und über die Schnitstelle (10) ausgebbar sind.

16. Sensoranordnung (100) nach einem der Ansprüche 1 bis 15, **dadurch gekennzeichnet, dass** die externe Einheit (12) ein Bedien- oder Anzeigegerät ist oder aufweist, wobei mittels des Anzeigegeräts Betriebsinformationen und/oder Diagnoseinformationen anzeigbar sind.

17. Sensoranordnung (100) nach einem der Ansprüche 1 bis 16, **dadurch gekennzeichnet, dass** der optische Sensor ein Sicherheitssensor ist, wobei der Sicherheitssensor in einen sicheren Zustand überführt wird, wenn anhand der Diagnoseinformationen ein Fehlerzustand detektiert wird.

## Claims

1. Sensor assembly (100) comprising an optical sensor, wherein the optical sensor has at least one beam axis formed by a transmitter (4) emitting light beams (3) and a receiver (6) spatially separated from the transmitter (4), which is configured to receive the light beams (3) from the transmitter (4), wherein optical communication between the transmitter (4) and the receiver (6) is possible by means of the light beams (3), wherein the transmitter (4) is configured to transmit to transmit operational information and/or diagnostic information to the receiver (6), and the receiver (6) is configured to output operational information and/or diagnostic information and/or information derived from operational information and/or diagnostic information via a communication system (11) to an external unit (12), wherein, in a fault or diagnostic state of the transmitter(s) (4), only diagnostic information is transmitted, and in a normal state of the transmitter(s) (4), operational information is transmitted either alone or in combination with diagnostic information, wherein, following the cessation of the fault or diagnostic state, only diagnostic information is transmitted from the transmitter(s) (4) for a predetermined period of time, and following the expiry of this period of time, operational information is transmitted.

2. Sensor arrangement (100) according to claim 1, **characterised in that** it comprises two spatially separated transceivers (13a, 13b), each having an arrangement of transmitters (4) and receivers (6), or **in that** the optical sensor is a light barrier with only one beam axis or a light curtain (1) with multiple beam axes.

3. Sensor arrangement (100) according to claim 2, **characterised in that** only one transceiver (13a, 13b) is connected to the communication system (11).

4. Sensor arrangement (100) according to claim 3, **characterised in that** either both transceivers (13a, 13b) transmit information about the transmission beams to the other respective transceiver (13b, 13a), or that only one transceiver (13a, 13b) transmits information to the transceiver (13a, 13b) with the connected communication system (11).

5. Sensor arrangement (100) according to any one of claims 1 to 4, **characterised in that** the communication system (11) is an IO-Link connection, a fieldbus or a Bluetooth, WLAN or NFC data connection.

6. Sensor arrangement (100) according to any one of claims 1 to 5, **characterised in that** the transmission of operating information and/or diagnostic information is initiated upon switching on the transmitter(s) (4) and is maintained for a predetermined duration.

7. Sensor arrangement (100) according to any one of claims 1 to 6, **characterised in that**, in the normal state, operational information and diagnostic information are transmitted in the form of operational transmission protocols, and that, in the fault and diagnostic state, diagnostic information is transmitted in the form of diagnostic protocols, wherein the operational transmission protocols and diagnostic protocols differ from one another.

8. Sensor arrangement (100) according to any one of claims 1 to 7, **characterised in that**, in the case of an optical sensor designed as a light curtain (1), the operational information is transmitted either via all beam axes or only via selected beam axes, and the diagnostic information is transmitted only via individual, selected beam axes.

9. Sensor arrangement (100) according to any one of claims 1 to 8, **characterised in that** identifiers in the form of beam codes are imprinted on the light beams (3), by means of which the light beams (3) can be identified and distinguished.

10. Sensor arrangement (100) according to claim 9, **characterised in that**, in the case of an optical sensor designed as a light curtain (1), the light beams (3) of at least one transmitter (4) are used for the optical synchronisation of the light curtain (1), and/or that the operational information and diagnostic information are formed from beam codes provided in addition to the identifiers.

11. Sensor arrangement (100) according to one of claims 1 to 10, **characterised in that** diagnostic information and operational information are transmitted alternately, and/or that diagnostic information and/or operational information are transmitted cyclically.

12. Sensor arrangement (100) according to claim 11, **characterised in that** within a cycle only a portion of diagnostic information or operational information is transmitted, and that the diagnostic information or operational information is assembled on the receiving end from several pieces of information transmitted in individual cycles, and/or that the operational information and diagnostic information contain verification information, wherein this verification information is checked at the receiving end to determine the validity of the operational information and diagnostic information.

13. Sensor arrangement (100) according to one of claims 1 to 12, **characterised in that** the receiver(s) (6) are integrated into a receiver unit which comprises an evaluation unit (9) for evaluating received signals from the receiver(s) (6), and/or **in that** the transmitter(s) (4) are integrated into a transmitter unit comprising a transmitter controller (8) for controlling the operation of the transmitter(s) (4).

14. Sensor arrangement (100) according to claim 13, **characterised in that** the receiver unit comprises a digital or analogue interface (10) for connecting the communication system (11).

15. Sensor arrangement (100) according to claim 14, **characterised in that** a non-volatile memory is provided in the receiver unit, in which operating information and/or diagnostic information and/or information derived therefrom relating to the transmitter (4) and/or receiver (6) can be stored, and that operational information and/or diagnostic information and/or information derived therefrom can be read out of the non-volatile memory at preset times and output via the interface (10).

16. Sensor assembly (100) according to any one of claims 1 to 15, **characterised in that** the external unit (12) is or comprises a control or display device, whereby operational information and/or diagnostic information can be displayed by means of the display device.

17. Sensor arrangement (100) according to any one of claims 1 to 16, **characterised in that** the optical sensor is a safety sensor, wherein the safety sensor is switched to a safe state if a fault condition is detected on the basis of the diagnostic information.

## Revendications

1. Agencement de capteurs (100) comprenant un capteur optique, dans lequel le capteur optique comporte au moins un axe de faisceau formé par un émetteur (4) émettant des faisceaux lumineux (3) et un récepteur (6) séparé spatialement de l'émetteur (4), qui est configuré pour recevoir les faisceaux lumineux (3) provenant de l'émetteur (4), dans lequel une communication optique entre l'émetteur (4) et le récepteur (6) est possible au moyen des faisceaux lumineux (3), dans lequel l'émetteur (4) est configuré pour transmettre des informations de fonctionnement et/ou des informations de diagnostic au récepteur (6), et le récepteur (6) est configuré pour transmettre des informations opérationnelles et/ou des informations de diagnostic et/ou des informations dérivées d'informations opérationnelles et/ou d'informations de diagnostic via un système de communication (11) à une unité externe (12), dans lequel, dans un état de défaut ou de diagnostic du ou des émetteurs (4), seules des informations de diagnostic sont transmises, et dans un état normal du ou des émetteurs (4), des informations opérationnelles sont transmises soit seules, soit en combinaison avec des informations de diagnostic, dans lequel, après la fin de l'état de défaut ou de diagnostic, seules des informations de diagnostic sont transmises par le ou les émetteurs (4) pendant une durée prédéterminée, et après l'expiration de cette durée, des informations opérationnelles sont transmises.

2. Agencement de capteurs (100) selon la revendication 1, **caractérisé en ce qu'**il comprend deux émetteurs-récepteurs (13a, 13b) séparés dans l'espace, chacun comportant un agencement d'émetteurs (4) et de récepteurs (6), ou **en ce que** le capteur optique est une barrière lumineuse à un seul axe de faisceau ou un rideau lumineux (1) à axes de faisceaux multiples

3. Agencement de capteurs (100) selon la revendication 2, **caractérisé en ce qu'**un seul émetteur-récepteur (13a, 13b) est connecté au système de communication (11).

4. Agencement de capteurs (100) selon la revendication 3, **caractérisé en ce que** soit les deux émetteurs-récepteurs (13a, 13b) transmettent des informations sur les faisceaux de transmission à l'autre émetteur-récepteur respectif (13b, 13a), soit qu'un seul émetteur-récepteur (13a, 13b) transmet des informations à l'émetteur-récepteur (13a, 13b) relié au système de communication (11).

5. Agencement de capteurs (100) selon l'une quelconque des revendications 1 à 4, **caractérisé en ce que** le système de communication (11) est une connexion IO-Link, un bus de terrain ou une connexion de données Bluetooth, WLAN ou NFC.

6. Agencement de capteurs (100) selon l'une quelconque des revendications 1 à 5, **caractérisé en ce que** la transmission d'informations de fonctionnement et/ou d'informations de diagnostic est déclenchée lors de la mise sous tension du ou des émetteurs (4) et est maintenue pendant une durée prédéterminée.

7. Agencement de capteurs (100) selon l'une quelconque des revendications 1 à 6, **caractérisé en ce que**, à l'état normal, les informations de fonctionnement et les informations de diagnostic sont transmises sous la forme de protocoles de transmission de fonctionnement, et **en ce que**, à l'état de défaut et de diagnostic, les informations de diagnostic sont transmises sous la forme de protocoles de diagnostic, les protocoles de transmission de fonctionnement et les protocoles de diagnostic étant différents les uns des autres.

8. Agencement de capteurs (100) selon l'une quelconque des revendications 1 à 7, **caractérisé en ce que**, dans le cas d'un capteur optique conçu sous la forme d'une barrière lumineuse (1), les informations opérationnelles sont transmises soit via tous les axes de faisceau, soit uniquement via des axes de faisceau sélectionnés, et les informations de diagnostic sont transmises uniquement via des axes de faisceau individuels sélectionnés.

9. Agencement de capteurs (100) selon l'une quelconque des revendications 1 à 8, **caractérisé en ce que** des identifiants sous forme de codes de faisceaux sont imprimés sur les faisceaux lumineux (3), grâce auxquels les faisceaux lumineux (3) peuvent être identifiés et distingués.

10. Agencement de capteurs (100) selon la revendication 9, **caractérisé en ce que**, dans le cas d'un capteur optique conçu sous la forme d'un rideau lumineux (1), les faisceaux lumineux (3) d'au moins un émetteur (4) sont utilisés pour la synchronisation optique du rideau lumineux (1), et/ou **en ce que** les informations de fonctionnement et les informations de diagnostic sont formées à partir de codes de faisceaux fournis en plus des identifiants.

11. Agencement de capteurs (100) selon l'une des revendications 1 à 10, **caractérisé en ce que** les informations de diagnostic et les informations de fonctionnement sont transmises en alternance, et/ou **en ce que** les informations de diagnostic et/ou les informations de fonctionnement sont transmises de manière cyclique.

12. Agencement de capteurs (100) selon la revendication 11, **caractérisé en ce que**, au cours d'un cycle, seule une partie des informations de diagnostic ou des informations de fonctionnement est transmise, et **en ce que** les informations de diagnostic ou les informations de fonctionnement sont assemblées du côté réception à partir de plusieurs éléments d'information transmis au cours de cycles individuels, et/ou **en ce que** les informations de fonctionnement et les informations de diagnostic contiennent des informations de vérification, ces informations de vérification étant contrôlées du côté de la réception pour déterminer la validité des informations de fonctionnement et des informations de diagnostic.

13. Agencement de capteurs (100) selon l'une des revendications 1 à 12, **caractérisé en ce que** le ou les récepteurs(s) (6) sont intégrés dans une unité de réception qui comprend une unité d'évaluation (9) pour évaluer les signaux reçus provenant du ou des récepteurs (6), et/ou **en ce que** le ou les émetteurs (4) sont intégrés dans une unité d'émission comprenant un contrôleur d'émission (8) pour commander le fonctionnement du ou des émetteurs (4).

14. Agencement de capteurs (100) selon la revendication 13, **caractérisé en ce que** l'unité de réception comprend une interface numérique ou analogique (10) pour connecter le système de communication (11).

15. Agencement de capteurs (100) selon la revendication 14, **caractérisé en ce qu'**une mémoire non volatile est prévue dans l'unité de réception, dans laquelle des informations de fonctionnement et/ou des informations de diagnostic et/ou des informations qui en découlent, relatives à l'émetteur (4) et/ou au récepteur (6), peuvent être stockées, et **en ce que** des informations de fonctionnement et/ou des informations de diagnostic et/ou des informations qui en découlent peuvent être lues à partir de la mémoire non volatile à des moments prédéfinis et transmises via l'interface (10).

16. Agencement de capteurs (100) selon l'une quelconque des revendications 1 à 15, **caractérisé en ce que** l'unité externe (12) est ou comprend un dispositif de commande ou d'affichage, grâce auquel des informations de fonctionnement et/ou des informations de diagnostic peuvent être affichées au moyen du dispositif d'affichage.

17. Agencement de capteurs (100) selon l'une quelconque des revendications 1 à 16, **caractérisé en ce que** le capteur optique est un capteur de sécurité, le capteur de sécurité étant commuté dans un état de sécurité si un état de défaut est détecté sur la base des informations de diagnostic.
